# EUROPÄISCHE PATENTANMELDUNG

(11) **EP 4 578 280 A1**
(43) Veröffentlichungstag der Anmeldung: **02.07.2025**
(21) Anmeldenummer: 24401028.6
(22) Anmeldetag: 13.12.2024
(51) Int. Cl.: A01M 7/00, A01C 7/04, A01C 7/08, A01C 21/00

(54) **LANDWIRTSCHAFTLICHE AUSBRINGMASCHINE**

(30) Priorität: 22.12.2023 DE 102023136458
(71) Anmelder: Amazonen-Werke H. Dreyer SE & Co. KG, 49205 Hasbergen (DE)
(72) Erfinder: große Prues, Frank, 49205 Hasbergen (DE); Heer, Jochen, 49205 Hasbergen (DE)

(57) **Zusammenfassung**

Die Erfindung betrifft eine landwirtschaftliche Ausbringmaschine, insbesondere Feldspritze oder Sämaschine, mit mehreren quer zur Fahrtrichtung nebeneinander angeordneten Ausbringelementen zum Ausbringen von Ausbringmaterial auf eine landwirtschaftliche Nutzfläche, mehreren fernbedienbaren Schaltelementen, welche jeweils zumindest einem Ausbringelement zugeordnet und dazu eingerichtet sind, das dem jeweiligen Schaltelement zugeordnete Ausbringelement zum Unterbrechen der Materialausbringung über das Ausbringelement abzuschalten und/oder zum Fortsetzen der Materialausbringung über das Ausbringelement zuzuschalten.

## Beschreibung

Die Erfindung betrifft eine landwirtschaftliche Ausbringmaschine nach dem Oberbegriff des Anspruchs 1.

Landwirtschaftliche Ausbringmaschinen, mit welchen Ausbringmaterial auf eine landwirtschaftliche Nutzfläche ausbringbar ist, weisen üblicherweise mehrere quer zur Fahrtrichtung nebeneinander angeordnete Ausbringelemente auf. Bei der Ausbringung von Spritzflüssigkeit können die Ausbringelemente beispielsweise Spritzdüsen sein. Bei der Ausbringung von granularem oder schüttgutartigem Ausbringmaterial, wie etwa Saatgut oder Dünger, können die Ausbringelemente beispielsweise Säschare bzw. den Säscharen zugeordnete Saatgutförderleitungen oder dergl. oder Düngerabgabeeinrichtungen sein.

Gattungsgemäße Ausbringmaschinen weisen außerdem mehrere fernbedienbaren Schaltelemente auf, welche jeweils einem Ausbringelement zugeordnet sind. Die Schaltelemente können je nach Maschinentyp beispielsweise Ventile für Spritzflüssigkeit oder Sperrkörper für eine granulares oder schüttgutartiges Ausbringmaterial umfassende Materialströmung, beispielsweise eine Saatgutströmung oder eine Düngerströmung, sein. Mit den Schaltelementen kann das dem jeweiligen Schaltelement zugeordnete Ausbringelement zum Unterbrechen der Materialausbringung über das Ausbringelement abgeschaltet und zum Fortsetzen der Materialausbringung über das Ausbringelement zugeschaltet werden.

Die Ausbringelemente der bekannten Ausbringmaschinen können beispielsweise einzeln manuell zu- und abgeschaltet werden, wodurch bei einer Vielzahl von ab- oder zuzuschaltenden Ausbringelementen viele Bedienaktionen vom Bediener erforderlich sind, wodurch die Einstellung einen hohen Bedien- und Zeitaufwand bedingt. Alternativ können Ausbringelemente manuell gruppenweise zu- und abgeschaltet werden, wobei in diesem Fall keine Einzelzuschaltung bzw. Einzelabschaltung von Ausbringelementen möglich ist, sodass die beabsichtigte Schaltkonfiguration häufig nicht präzise einstellbar ist.

Die der Erfindung zugrunde liegende Aufgabe besteht also darin, das manuelle Zu- und Abschalten von Ausbringelementen zu vereinfachen, ohne dabei die einstellbare Schaltkonfiguration einzuschränken.

Die Aufgabe wird gelöst durch eine landwirtschaftliche Ausbringmaschine der eingangs genannten Art, wobei die erfindungsgemäße landwirtschaftliche Ausbringmaschine eine Bedienungseinrichtung aufweist, an welcher mittels einer von einem Bediener ausführbaren Bedienaktion wahlweise Schaltgruppen von mehreren Ausbringelementen durch eine Gruppenansteuerung von Schaltelementen gemeinsam abschaltbar und/oder zuschaltbar sind und einzelne Ausbringelemente einer Schaltgruppe durch eine Einzelansteuerung von Schaltelementen abschaltbar und/oder zuschaltbar sind.

Dadurch, dass mittels einer Bedienaktion wahlweise Schaltgruppen von mehreren Ausbringelementen und einzelne Ausbringelemente einer Schaltgruppe abschaltbar und/oder zuschaltbar sind, wird das manuelle Zu- und Abschalten von Ausbringelementen erheblich vereinfacht, ohne dabei die einstellbare Schaltkonfiguration einzuschränken.

Die erfindungsgemäße landwirtschaftliche Ausbringmaschine ist vorzugsweise eine Feldspritze oder eine Sämaschine oder ein Düngerstreuer, insbesondere ein pneumatischer Düngerstreuer oder ein Zentrifugal-Düngerstreuer.

Durch die Möglichkeit, sowohl Schaltgruppen von mehreren Ausbringelementen als auch einzelne Ausbringelemente abschalten und zuschalten zu können, wird der Bedienkomfort erheblich gesteigert und die Einstelldauer für das manuelle Ab- und Zuschalten von Ausbringelementen wird erheblich verkürzt. Die Bedienungseinrichtung kann Schaltbedienfelder oder Schaltbedientasten umfassen. Die Schaltelemente können auch als Dosierelemente bezeichnet werden. Die Schaltelemente können beispielsweise pulsweitenmoduliert (PWM) gesteuerte Ventile oder andere Formen elektrischer oder pneumatischer Aktoren zum Schalten, insbesondere zum Unterbrechen und/oder Freigeben, eines Flüssigkeits- und/oder eines Materialströmungspfads sein. Der Materialströmungspfad kann beispielsweise ein Saatgutströmungspfad oder ein Düngerströmungspfad sein.

In einer bevorzugten Ausführungsform der erfindungsgemäßen landwirtschaftliche Ausbringmaschine ist die Bedienungseinrichtung dazu eingerichtet, eine Übersteuerung von auf einer Ausbringsteuerung basierenden Schaltvorgaben für die Schaltgruppen und/oder die einzelnen Ausbringelemente durch die von dem Bediener ausführbaren Bedienaktionen zum Abschalten und/oder Zuschalten von Schaltgruppen und/oder einzelnen Ausbringelementen zu veranlassen. Die Schaltgruppen und deren Ausbringelemente werden im Rahmen der Ausbringsteuerung beispielsweise automatisch, insbesondere unter Berücksichtigung von GPS-Daten und/oder unter Beteiligung eines als Task-Controller fungierenden Steuergeräts, geschaltet. Die manuellen Bedienaktionen des Bedieners sind steuerungshierarchisch höherrangig und führen zu einer Übersteuerung der auf der Ausbringsteuerung basierenden Schaltvorgaben. Im Rahmen der Ausbringsteuerung werden die Ausbringelemente einzeln oder in mehreren Ausbringelemente umfassenden Steuerungsgruppen angesteuert. Die Steuerungsgruppen müssen nicht zwangsläufig identisch zu den manuell steuerbaren Schaltgruppen sein. Vorzugsweise bleiben manuell abgeschaltete Ausbringelemente abgeschaltet, auch wenn die Ausbringsteuerung diese zuschalten würde. Jedoch kann die Ausbringsteuerung Ausbringelemente abschalten, die manuell zugeschaltet wurden. Die Ausbringsteuerung läuft vorzugsweise parallel zu einer Mengensteuerung und ist besonders vorzugsweise nach Art von Section Control ausgeführt. Über die Ausbringsteuerung können beispielsweise einzelne Ausbringelemente zu- und/oder abgeschaltet werden. Diese Steuerung des Schaltzustands der Ausbringelemente erfolgt parallel und/oder unabhängig von der Mengensteuerung, über welche die Ausbringmengen bzw. Durchflussmengen geregelt werden. Die Mengensteuerung erlaubt vorzugsweise lediglich die Mengen von gruppenweise zusammengeschalteten Ausbringelementen zu regeln. Somit ist die Ausbringsteuerung höher aufgelöst als die Mengensteuerung. Die Mengensteuerung steuert vorzugsweise die Menge, beispielsweise 200l/ha. Die Ausbringsteuerung steuert die Arbeitsbreite der Ausbringmaschine. Die Mengensteuerung und die Ausbringsteuerung arbeiten vorzugsweise unabhängig voneinander, mit der Ausnahme, dass die Mengensteuerung berücksichtigt, wie viele Ausbringelemente die Ausbringsteuerung bei welcher Fahrgeschwindigkeit aktiviert hat. Diese Informationen wird beispielsweise benötigt, um von einer flächenbezogenen Ausbringmenge, beispielsweise in [I/ha] auf eine zeitbezogene Ausbringmenge, beispielsweise in [l/min] umzurechnen.

In einer anderen bevorzugten Ausführungsform der erfindungsgemäßen landwirtschaftliche Ausbringmaschine ist an der Bedienungseinrichtung eine Bedienaktion zum Abschalten oder Zuschalten von Schaltgruppen und/oder einzelner Ausbringelemente durch Betätigung eines Schaltbedienfeldes oder einer Schaltbedientaste der Bedienungseinrichtung ausführbar. Durch eine länger als eine spezifische Betätigungszeitdauer anhaltende Betätigung eines Schaltbedienfeldes oder einer Schaltbedientaste können beispielsweise sämtliche Schaltgruppen oder Ausbringelemente gleichzeitig oder sämtliche Schaltgruppen oder Ausbringelemente in einer spezifischen Reihenfolge zeitversetzt zueinander abgeschaltet oder zugeschaltet werden. An der Bedienungseinrichtung ist vorzugsweise eine Bedienaktion zum Abschalten oder Zuschalten von Schaltgruppen durch Betätigung eines Gruppenschaltbedienfeldes oder einer Gruppenschaltbedientaste der Bedienungseinrichtung ausführbar und/oder eine Bedienaktion zum Abschalten oder Zuschalten einzelner Ausbringelemente durch Betätigung eines Einzelschaltbedienfeldes oder einer Einzelschaltbedientaste der Bedienungseinrichtung ausführbar. Durch eine länger als eine spezifische Betätigungszeitdauer anhaltende Betätigung eines Gruppenschaltbedienfeldes oder einer Gruppenschaltbedientaste werden sämtliche Schaltgruppen gleichzeitig oder in einer spezifischen Reihenfolge zeitversetzt zueinander abgeschaltet oder zugeschaltet. Alternativ zum Betätigen eines Gruppenschaltbedienfeldes bzw. einer Gruppenschaltbedientaste können auch allgemeine Schaltbedienfelder bzw. allgemeine Schaltbedientasten länger als eine spezifische Betätigungszeitdauer betätigt werden.

In einer bevorzugten Weiterbildung der landwirtschaftlichen Ausbringmaschine erlaubt die Bedienungseinrichtung seitenspezifische Bedienaktionen zum Ansteuern der den Ausbringelementen auf einer Seite der landwirtschaftlichen Ausbringmaschine zugeordneten Schaltelemente. Eine seitenspezifische Bedienaktion kann das Ansteuern der den Ausbringelementen auf der linken Seite der landwirtschaftlichen Ausbringmaschine zugeordneten Schaltelemente oder das Ansteuern der den Ausbringelementen auf der rechten Seite der landwirtschaftlichen Ausbringmaschine zugeordneten Schaltelemente betreffen.

In einer weiteren vorteilhaften Ausführungsform der erfindungsgemäßen landwirtschaftliche Ausbringmaschine ist die Bedienungseinrichtung dazu eingerichtet, bei einer von einem Bediener ausgeführten seitenspezifischen Bedienaktion zum Abschalten einer Schaltgruppe die äußerste noch zugeschaltete Ausbringelemente umfassende Schaltgruppe auf der betroffenen Seite der landwirtschaftlichen Ausbringmaschine abzuschalten. Die Abschaltung von Schaltgruppen erfolgt somit von außen nach innen. Die Abschaltung von Schaltgruppen erfolgt also auf der rechten Seite der landwirtschaftlichen Ausbringmaschine von rechts nach links und auf der linken Seite der landwirtschaftlichen Ausbringmaschine von links nach rechts.

Es ist außerdem eine landwirtschaftliche Ausbringmaschine vorteilhaft, bei welcher an der Bedienungseinrichtung eine seitenspezifische Bedienaktion zum Abschalten einer Schaltgruppe auf einer ersten Seite der landwirtschaftlichen Ausbringmaschine durch Betätigung eines ersten Gruppenabschaltbedienfeldes oder einer ersten Gruppenabschaltbedientaste der Bedienungseinrichtung ausführbar ist. An der Bedienungseinrichtung ist ferner eine seitenspezifische Bedienaktion zum Abschalten einer Schaltgruppe auf einer zweiten Seite der landwirtschaftlichen Ausbringmaschine durch Betätigung eines zweiten Gruppenabschaltbedienfeldes oder einer zweiten Gruppenabschaltbedientaste der Bedienungseinrichtung ausführbar. Durch eine länger als eine spezifische Betätigungszeitdauer anhaltende Betätigung eines Gruppenabschaltbedienfeldes oder einer Gruppenabschaltbedientaste werden vorzugsweise sämtliche Schaltgruppen der betroffenen Seite gleichzeitig oder in einer spezifischen Reihenfolge zeitversetzt zueinander abgeschaltet. Alternativ zum Betätigen eines ersten und zweiten Gruppenabschaltbedienfeldes bzw. einer ersten und zweiten Gruppenabschaltbedientaste können auch erste und zweite allgemeine Abschaltbedienfelder bzw. erste und zweite allgemeine Abschaltbedientasten länger als eine spezifische Betätigungszeitdauer betätigt werden.

In einer Weiterbildung der erfindungsgemäßen landwirtschaftlichen Ausbringmaschine ist die Bedienungseinrichtung dazu eingerichtet, bei einer von einem Bediener ausgeführten seitenspezifischen Bedienaktion zum Zuschalten einer Schaltgruppe die äußerste noch zugeschaltete Ausbringelemente umfassende Schaltgruppe auf der betroffenen Seite der landwirtschaftlichen Ausbringmaschine zuzuschalten oder die außenseitig der äußersten vollständig zugeschalteten Schaltgruppe angeordnete Schaltgruppe auf der betroffenen Seite der landwirtschaftlichen Ausbringmaschine zuzuschalten. Die Zuschaltung von Schaltgruppen erfolgt somit von innen nach außen. Die Zuschaltung von Schaltgruppen erfolgt also auf der rechten Seite der landwirtschaftlichen Ausbringmaschine von links nach rechts und auf der linken Seite der landwirtschaftlichen Ausbringmaschine von rechts nach links.

In einer anderen bevorzugten Ausführungsform der erfindungsgemäßen landwirtschaftlichen Ausbringmaschine ist an der Bedienungseinrichtung eine seitenspezifische Bedienaktion zum Zuschalten einer Schaltgruppe auf einer ersten Seite der landwirtschaftlichen Ausbringmaschine durch Betätigung eines ersten Gruppenzuschaltbedienfeldes oder einer ersten Gruppenzuschaltbedientaste der Bedienungseinrichtung ausführbar. Ferner ist an der Bedienungseinrichtung eine seitenspezifische Bedienaktion zum Zuschalten einer Schaltgruppe auf einer zweiten Seite der landwirtschaftlichen Ausbringmaschine durch Betätigung eines zweiten Gruppenzuschaltbedienfeldes oder einer zweiten Gruppenzuschaltbedientaste der Bedienungseinrichtung ausführbar. Durch eine länger als eine spezifische Betätigungszeitdauer anhaltende Betätigung eines Gruppenzuschaltbedienfeldes oder einer Gruppenzuschaltbedientaste werden sämtliche Schaltgruppen der betroffenen Seite gleichzeitig oder in einer spezifischen Reihenfolge zeitversetzt zueinander zugeschaltet. Alternativ zum Betätigen eines ersten und zweiten Gruppenzuschaltbedienfeldes bzw. einer ersten und zweiten Gruppenzuschaltbedientaste können auch erste und zweite allgemeine Zuschaltbedienfelder bzw. erste und zweite allgemeine Zuschaltbedientasten länger als eine spezifische Betätigungszeitdauer betätigt werden.

Die erfindungsgemäße landwirtschaftliche Ausbringmaschine wird ferner dadurch vorteilhaft weitergebildet, dass die Bedienungseinrichtung dazu eingerichtet ist, bei einer von einem Bediener ausgeführten seitenspezifischen Bedienaktion zum Abschalten eines einzelnen Ausbringelements das äußerste noch zuschaltete Ausbringelement auf der betroffenen Seite der landwirtschaftlichen Ausbringmaschine abzuschalten. Die Abschaltung von einzelnen Ausbringelementen erfolgt somit von außen nach innen. Die Abschaltung von einzelnen Ausbringelementen erfolgt auf der rechten Seite der landwirtschaftlichen Ausbringmaschine von rechts nach links und auf der linken Seite der landwirtschaftlichen Ausbringmaschine von links nach rechts.

Es ist ferner eine erfindungsgemäße landwirtschaftliche Ausbringmaschine bevorzugt, bei welcher an der Bedienungseinrichtung eine seitenspezifische Bedienaktion zum Abschalten eines einzelnen Ausbringelements auf einer ersten Seite der landwirtschaftlichen Ausbringmaschine durch Betätigung eines ersten Einzelabschaltbedienfeldes oder einer ersten Einzelabschaltbedientaste der Bedienungseinrichtung ausführbar ist. An der Bedienungseinrichtung ist ferner eine seitenspezifische Bedienaktion zum Abschalten eines einzelnen Ausbringelements auf einer zweiten Seite der landwirtschaftlichen Ausbringmaschine durch Betätigung eines zweiten Einzelabschaltbedienfeldes oder einer zweiten Einzelabschaltbedientaste der Bedienungseinrichtung ausführbar. Alternativ zum Betätigen eines ersten und zweiten Einzelabschaltbedienfeldes bzw. einer ersten und zweiten Einzelabschaltbedientaste können auch erste und zweite allgemeine Abschaltbedienfelder bzw. erste und zweite allgemeine Abschaltbedientasten kürzer als eine spezifische Betätigungszeitdauer betätigt werden.

Es ist darüber hinaus eine erfindungsgemäße landwirtschaftliche Ausbringmaschine bevorzugt, bei welcher die Bedienungseinrichtung dazu eingerichtet ist, bei einer von einem Bediener ausgeführten seitenspezifischen Bedienaktion zum Zuschalten eines einzelnen Ausbringelements das innerste noch abgeschaltete Ausbringelement auf der betroffenen Seite der landwirtschaftlichen Ausbringmaschine zuzuschalten. Die Zuschaltung von einzelnen Ausbringelementen erfolgt somit von innen nach außen. Die Zuschaltung von einzelnen Ausbringelementen erfolgt auf der rechten Seite der landwirtschaftlichen Ausbringmaschine von links nach rechts und auf der linken Seite der landwirtschaftlichen Ausbringmaschine von rechts nach links.

In einer vorteilhaften Weiterbildung der erfindungsgemäßen landwirtschaftlichen Ausbringmaschine ist an der Bedienungseinrichtung eine seitenspezifische Bedienaktion zum Zuschalten eines einzelnen Ausbringelements auf einer ersten Seite der landwirtschaftlichen Ausbringmaschine durch Betätigung eines ersten Einzelzuschaltbedienfeldes oder einer ersten Einzelzuschaltbedientaste der Bedienungseinrichtung ausführbar. Ferner ist an der Bedienungseinrichtung eine seitenspezifische Bedienaktion zum Zuschalten eines einzelnen Ausbringelements auf einer zweiten Seite der landwirtschaftlichen Ausbringmaschine durch Betätigung eines zweiten Einzelzuschaltbedienfeldes oder einer zweiten Einzelzuschaltbedientaste der Bedienungseinrichtung ausführbar. Alternativ zum Betätigen eines ersten und zweiten Einzelzuschaltbedienfeldes bzw. einer ersten und zweiten Einzelzuschaltbedientaste können auch erste und zweite allgemeine Zuschaltbedienfelder bzw. erste und zweite allgemeine Zuschaltbedientasten kürzer als eine spezifische Betätigungszeitdauer betätigt werden.

Die erfindungsgemäße landwirtschaftliche Ausbringmaschine wird ferner dadurch vorteilhaft weitergebildet, dass die Ausbringelemente als Spritzdüsen und/oder die Schaltelemente als Durchflusssperrventile oder Durchflussregelventile ausgebildet sind. Die landwirtschaftliche Ausbringmaschine ist vorzugsweise eine Feldspritze.

In einer anderen Ausführungsform der erfindungsgemäßen landwirtschaftlichen Ausbringmaschine sind die Ausbringelemente als Säschare und/oder die Schaltelemente als Sperrkörper zum Sperren von zu den Säscharen führenden Ausbringpfaden ausgebildet. Die landwirtschaftliche Ausbringmaschine ist vorzugsweise eine Sämaschine.

In einer anderen Ausführungsform der erfindungsgemäßen landwirtschaftlichen Ausbringmaschine sind die Ausbringelemente als Düngerabgabeeinrichtungen und/oder die Schaltelemente als Sperrkörper zum Sperren von zu den Düngerabgabeeinrichtungen führenden Ausbringpfaden ausgebildet. Die landwirtschaftliche Ausbringmaschine ist vorzugsweise ein Düngerstreuer, insbesondere ein pneumatischer Düngerstreuer oder ein Zentrifugal-Düngerstreuer.

Nachfolgend werden bevorzugte Ausführungsformen der Erfindung unter Bezugnahme auf die beiliegenden Zeichnungen näher erläutert und beschrieben. Dabei zeigen:
- Fig. 1: eine Bedienungseinrichtung einer erfindungsgemäßen landwirtschaftlichen Ausbringmaschine in einer schematischen Darstellung; und
- Fig. 2: die in der Fig. 1 abgebildete Bedienungseinrichtung nach Abschaltung von Ausbringelementen in einer schematischen Darstellung.

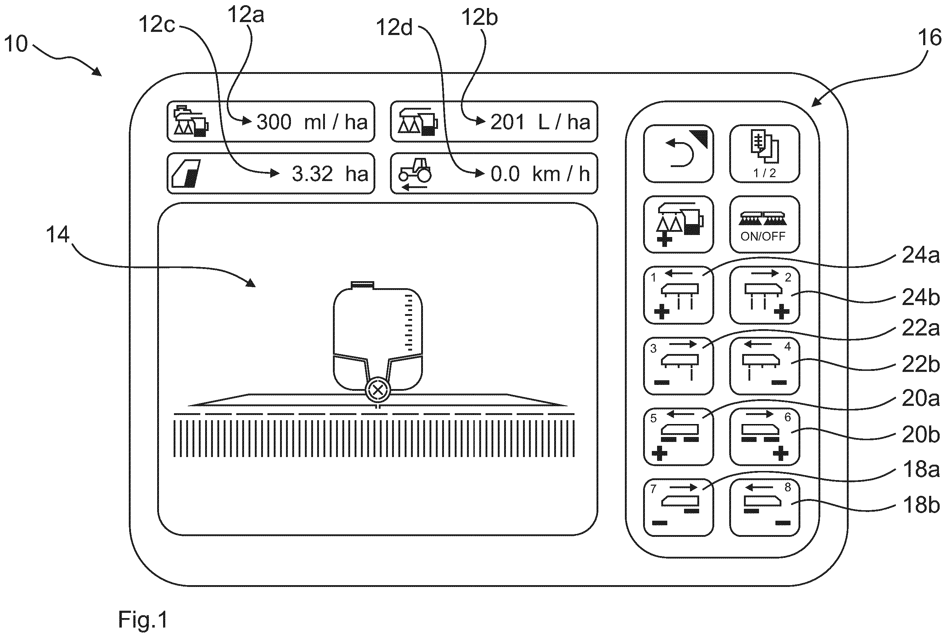

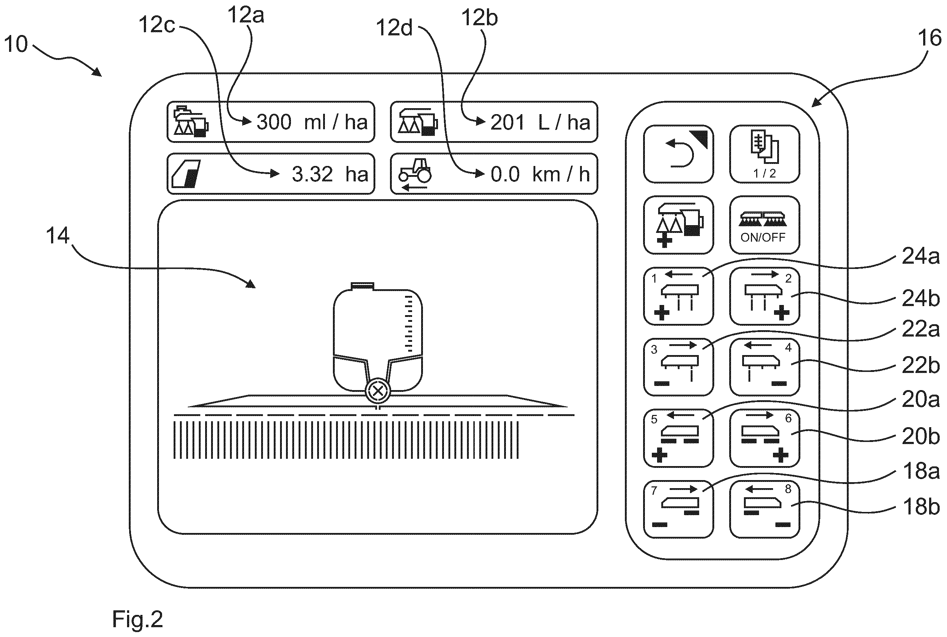

Die Fig. 1 und 2 zeigen eine Bedienungseinrichtung 10 einer als Feldspritze ausgebildeten landwirtschaftliche Ausbringmaschine. Die Bedienungseinrichtung 10 ist als Bedienterminal ausgebildet und umfasst einen berührungsempfindlichen Bildschirm.

Auf dem Bildschirm befindet sich Parameteranzeigen 12a-12d, welche dem Bediener Informationen zu dem aktuellen Ausbringvorgang zur Verfügung stellen. Die Parameteranzeige 12a betrifft die flächenbezogene Ausbringmenge an Wirkstoff in [ml / ha]. Die Parameteranzeige 12b betrifft die flächenbezogene Ausbringmenge der Spritzflüssigkeit in [L / ha]. Die Parameteranzeige 12c betrifft die bereits bearbeitete Fläche in [ha]. Die Parameteranzeige 12d betrifft die aktuelle Fahrgeschwindigkeit in [km / h].

Auf dem Bildschirm befindet sich ferner eine Ausbringvisualisierung 14, welche das Spritzgestänge sowie die an dem Spritzgestänge angeordneten Ausbringelemente graphisch wiedergibt. Die Ausbringelemente sind als Spritzdüsen ausgebildet und quer zur Fahrtrichtung nebeneinander angeordnet.

Die landwirtschaftliche Ausbringmaschine umfasst ferner mehrere fernbedienbare Schaltelemente. Die Schaltelemente sind beispielsweise Ventile welche jeweils zumindest einem Ausbringelement zugeordnet und dazu eingerichtet sind, das dem jeweiligen Schaltelement zugeordnete Ausbringelement zum Unterbrechen der Materialausbringung über das Ausbringelement abzuschalten und zum Fortsetzen der Materialausbringung über das Ausbringelement zuzuschalten.

Die unter dem Spritzgestänge dargestellten Horizontalbalken beziehen sich jeweils auf eine Schaltgruppe von mehreren Ausbringelementen. Die unter den Horizontalbalken dargestellten Vertikalbalken beziehen sich jeweils auf einzelne Ausbringelemente.

An der Bedieneinrichtung 10 sind mittels einer von einem Bediener ausführbaren Bedienaktion wahlweise Schaltgruppen von mehreren Ausbringelementen gemeinsam und einzelne Ausbringelemente einer Schaltgruppe abschaltbar und zuschaltbar. Auf dem Bildschirm befindet sich hierzu ein Bedienfeldbereich 16 mit mehreren Schaltbedienfeldern 18a, 18b, 20a, 20b, 22a, 22b, 24a, 24b. Die Bedienungseinrichtung 10 veranlasst bei Betätigung der Schaltbedienfelder 18a, 18b, 20a, 20b, 22a, 22b, 24a, 24b eine Übersteuerung von auf einer Ausbringsteuerung basierenden Schaltvorgaben für die Schaltgruppen und die einzelnen Ausbringelemente.

An der Bedienungseinrichtung 10 ist eine seitenspezifische Bedienaktion zum Abschalten einer Schaltgruppe auf der linken Seite der landwirtschaftlichen Ausbringmaschine durch Betätigung eines ersten Gruppenabschaltbedienfeldes 18a und eine seitenspezifische Bedienaktion zum Abschalten einer Schaltgruppe auf der rechten Seite der landwirtschaftlichen Ausbringmaschine durch Betätigung eines zweiten Gruppenabschaltbedienfeldes 18b ausführbar.

Die Bedienungseinrichtung 10 ist dazu eingerichtet, bei einer von einem Bediener ausgeführten seitenspezifischen Bedienaktion zum Abschalten einer Schaltgruppe die äußerste noch zugeschaltete Ausbringelemente umfassende Schaltgruppe auf der betroffenen Seite der landwirtschaftlichen Ausbringmaschine abzuschalten. Die Abschaltung von Schaltgruppen erfolgt also auf der rechten Seite der landwirtschaftlichen Ausbringmaschine von rechts nach links und auf der linken Seite der landwirtschaftlichen Ausbringmaschine von links nach rechts. Durch eine länger als eine spezifische Betätigungszeitdauer anhaltende Betätigung eines Gruppenabschaltbedienfeldes 18a, 18b werden sämtliche Schaltgruppen der betroffenen Seite von außen nach innen zeitversetzt zueinander abgeschaltet.

An der Bedienungseinrichtung 10 ist außerdem eine seitenspezifische Bedienaktion zum Zuschalten einer Schaltgruppe auf der linken Seite der landwirtschaftlichen Ausbringmaschine durch Betätigung eines ersten Gruppenzuschaltbedienfeldes 20a und eine seitenspezifische Bedienaktion zum Zuschalten einer Schaltgruppe auf der rechten Seite der landwirtschaftlichen Ausbringmaschine durch Betätigung eines zweiten Gruppenzuschaltbedienfeldes 20b ausführbar.

Die Bedienungseinrichtung 10 ist dazu eingerichtet, bei einer von einem Bediener ausgeführten seitenspezifischen Bedienaktion zum Zuschalten einer Schaltgruppe die äußerste noch zugeschaltete Ausbringelemente umfassende Schaltgruppe auf der betroffenen Seite der landwirtschaftlichen Ausbringmaschine zuzuschalten oder die außenseitig der äußersten vollständig zugeschalteten Schaltgruppe angeordnete Schaltgruppe auf der betroffenen Seite der landwirtschaftlichen Ausbringmaschine zuzuschalten. Die Zuschaltung von Schaltgruppen erfolgt also auf der rechten Seite der landwirtschaftlichen Ausbringmaschine von links nach rechts und auf der linken Seite der landwirtschaftlichen Ausbringmaschine von rechts nach links. Durch eine länger als eine spezifische Betätigungszeitdauer anhaltende Betätigung eines Gruppenzuschaltbedienfeldes 20a, 20b werden sämtliche Schaltgruppen der betroffenen Seite von innen nach außen zeitversetzt zueinander zugeschaltet.

An der Bedienungseinrichtung 10 ist außerdem eine seitenspezifische Bedienaktion zum Abschalten eines einzelnen Ausbringelements auf der linken Seite der landwirtschaftlichen Ausbringmaschine durch Betätigung eines ersten Einzelabschaltbedienfeldes 22a und eine seitenspezifische Bedienaktion zum Abschalten eines einzelnen Ausbringelements auf der rechten Seite der landwirtschaftlichen Ausbringmaschine durch Betätigung eines zweiten Einzelabschaltbedienfeldes 22b ausführbar.

Die Bedienungseinrichtung 10 ist dazu eingerichtet, bei einer von einem Bediener ausgeführten seitenspezifischen Bedienaktion zum Abschalten eines einzelnen Ausbringelements das äußerste noch zuschaltete Ausbringelement auf der betroffenen Seite der landwirtschaftlichen Ausbringmaschine abzuschalten. Die Abschaltung von einzelnen Ausbringelementen erfolgt also auf der rechten Seite der landwirtschaftlichen Ausbringmaschine von rechts nach links und auf der linken Seite der landwirtschaftlichen Ausbringmaschine von links nach rechts. Durch eine länger als eine spezifische Betätigungszeitdauer anhaltende Betätigung eines Einzelabschaltbedienfeldes 22a, 22b werden sämtliche Ausbringelemente der betroffenen Seite von außen nach innen zeitversetzt zueinander abgeschaltet.

An der Bedienungseinrichtung 10 ist außerdem eine seitenspezifische Bedienaktion zum Zuschalten eines einzelnen Ausbringelements auf der linken Seite der landwirtschaftlichen Ausbringmaschine durch Betätigung eines ersten Einzelzuschaltbedienfeldes 24a und eine seitenspezifische Bedienaktion zum Zuschalten eines einzelnen Ausbringelements auf der rechten Seite der landwirtschaftlichen Ausbringmaschine durch Betätigung eines zweiten Einzelzuschaltbedienfeldes 24b ausführbar.

Die Bedienungseinrichtung 10 ist dazu eingerichtet, bei einer von einem Bediener ausgeführten seitenspezifischen Bedienaktion zum Zuschalten eines einzelnen Ausbringelements das innerste noch abgeschaltete Ausbringelement auf der betroffenen Seite der landwirtschaftlichen Ausbringmaschine zuzuschalten. Die Zuschaltung von einzelnen Ausbringelementen erfolgt also auf der rechten Seite der landwirtschaftlichen Ausbringmaschine von links nach rechts und auf der linken Seite der landwirtschaftlichen Ausbringmaschine von rechts nach links. Durch eine länger als eine spezifische Betätigungszeitdauer anhaltende Betätigung eines Einzelzuschaltbedienfeldes 24a, 24b werden sämtliche Ausbringelemente der betroffenen Seite von innen nach außen zeitversetzt zueinander zugeschaltet.

In dem in der Fig. 1 dargestellten Schaltzustand sind sämtliche Ausbringelemente der landwirtschaftlichen Ausbringmaschine zugeschaltet. In dem in der Fig. 2 dargestellten Schaltzustand sind die äußeren neuen Ausbringelemente auf der rechten Seite der landwirtschaftlichen Ausbringmaschine abgeschaltet.

Der in Fig. 2 dargestellte Schaltzustand kann ausgehend von dem in der Fig. 1 dargestellten Schaltzustand
- durch neunmaliges kurzes Betätigen des Einzelabschaltbedienfeldes 22b, oder
- durch zweimaliges kurzes Betätigen des Gruppenabschaltbedienfelds 18b und einmaliges kurzes Betätigen des Einzelzuschaltbedienfeldes 24b, oder
- durch einmaliges kurzes Betätigen des Gruppenabschaltbedienfeldes 18b und viermaliges kurzes Betätigen des Einzelabschaltbedienfelds 22b
- durch einmaliges längeres Betätigen des Einzelabschaltbedienfeldes 22b und anschließend viermaliges kurzes Betätigen von des Einzelabschaltbedienfeldes 22b
eingestellt werden. Der Wechsel von dem in der Fig. 2 dargestellten Schaltzustand zu dem in der Fig. 1 dargestellten Schaltzustand kann durch folgende Betätigungen erreicht werden:
- durch längeres Betätigen des Gruppenzuschaltbedienfeldes 20b, oder
- durch zweimaliges kurzes Betätigen des Gruppenzuschaltbedienfeldes 20b (beim ersten kurzen Betätigen des Gruppenzuschaltbedienfeldes 20b wird die noch nicht vollständig zugeschaltete Schaltgruppe vollständig zugeschaltet), oder
- durch längeres Betätigen des Einzelzuschaltbedienfeldes 24b, oder
- durch neunmaliges kurzes Bestätigen des Einzelzuschaltbedienfeldes 24b.

### Bezugszeichen

- 10: Bedienungseinrichtung
- 12a-12d: Parameteranzeigen
- 14: Ausbringvisualisierung
- 16: Bedienfeldbereich
- 18a, 18b: Gruppenabschaltbedienfelder
- 20a, 20b: Gruppenzuschaltbedienfelder
- 22a, 22b: Einzelabschaltbedienfelder
- 24a, 24b: Einzelzuschaltbedienfelder

## Patentansprüche

1. Landwirtschaftliche Ausbringmaschine, insbesondere Feldspritze oder Sämaschine, mit
- mehreren quer zur Fahrtrichtung nebeneinander angeordneten Ausbringelementen zum Ausbringen von Ausbringmaterial auf eine landwirtschaftliche Nutzfläche, und
- mehreren fernbedienbaren Schaltelementen, welche jeweils zumindest einem Ausbringelement zugeordnet und dazu eingerichtet sind, das dem jeweiligen Schaltelement zugeordnete Ausbringelement zum Unterbrechen der Materialausbringung über das Ausbringelement abzuschalten und/oder zum Fortsetzen der Materialausbringung über das Ausbringelement zuzuschalten;
**gekennzeichnet durch** eine Bedienungseinrichtung (10), an welcher mittels einer von einem Bediener ausführbaren Bedienaktion wahlweise Schaltgruppen von mehreren Ausbringelementen durch eine Gruppenansteuerung von Schaltelementen gemeinsam abschaltbar und/oder zuschaltbar sind und einzelne Ausbringelemente einer Schaltgruppe durch eine Einzelansteuerung von Schaltelementen abschaltbar und/oder zuschaltbar sind.

2. Landwirtschaftliche Ausbringmaschine nach Anspruch 1, **dadurch gekennzeichnet, dass** die Bedienungseinrichtung (10) dazu eingerichtet ist, eine Übersteuerung von auf einer Ausbringsteuerung basierenden Schaltvorgaben für die Schaltgruppen und/oder die einzelnen Ausbringelemente durch die von dem Bediener ausführbaren Bedienaktionen zum Abschalten und/oder Zuschalten von Schaltgruppen und/oder einzelnen Ausbringelementen zu veranlassen.

3. Landwirtschaftliche Ausbringmaschine nach Anspruch 1 oder 2, **dadurch gekennzeichnet, dass** an der Bedienungseinrichtung (10) eine Bedienaktion zum Abschalten oder Zuschalten von Schaltgruppen und/oder einzelner Ausbringelemente durch Betätigung eines Schaltbedienfeldes (18a, 18b, 20a, 20b, 22a, 22b, 24a, 24b) oder einer Schaltbedientaste der Bedienungseinrichtung (10) ausführbar ist.

4. Landwirtschaftliche Ausbringmaschine nach einem der vorstehenden Ansprüche, **dadurch gekennzeichnet, dass** die Bedienungseinrichtung (10) seitenspezifische Bedienaktionen zum Ansteuern der den Ausbringelementen auf einer Seite der landwirtschaftlichen Ausbringmaschine zugeordneten Schaltelemente erlaubt.

5. Landwirtschaftliche Ausbringmaschine nach Anspruch 4, **dadurch gekennzeichnet, dass** die Bedienungseinrichtung (10) dazu eingerichtet ist, bei einer von einem Bediener ausgeführten seitenspezifischen Bedienaktion zum Abschalten einer Schaltgruppe die äußerste noch zugeschaltete Ausbringelemente umfassende Schaltgruppe auf der betroffenen Seite der landwirtschaftlichen Ausbringmaschine abzuschalten.

6. Landwirtschaftliche Ausbringmaschine nach Anspruch 4 oder 5, **dadurch gekennzeichnet, dass**
- an der Bedienungseinrichtung (10) eine seitenspezifische Bedienaktion zum Abschalten einer Schaltgruppe auf einer ersten Seite der landwirtschaftlichen Ausbringmaschine durch Betätigung eines ersten Gruppenabschaltbedienfeldes (18a) oder einer ersten Gruppenabschaltbedientaste der Bedienungseinrichtung (10) ausführbar ist; und
- an der Bedienungseinrichtung (10) eine seitenspezifische Bedienaktion zum Abschalten einer Schaltgruppe auf einer zweiten Seite der landwirtschaftlichen Ausbringmaschine durch Betätigung eines zweiten Gruppenabschaltbedienfeldes (18b) oder einer zweiten Gruppenabschaltbedientaste der Bedienungseinrichtung (10) ausführbar ist.

7. Landwirtschaftliche Ausbringmaschine nach einem der Ansprüche 4 bis 6, **dadurch gekennzeichnet, dass** die Bedienungseinrichtung (10) dazu eingerichtet ist, bei einer von einem Bediener ausgeführten seitenspezifischen Bedienaktion zum Zuschalten einer Schaltgruppe
- die äußerste noch zugeschaltete Ausbringelemente umfassende Schaltgruppe auf der betroffenen Seite der landwirtschaftlichen Ausbringmaschine zuzuschalten, oder
- die außenseitig der äußersten vollständig zugeschalteten Schaltgruppe angeordnete Schaltgruppe auf der betroffenen Seite der landwirtschaftlichen Ausbringmaschine zuzuschalten.

8. Landwirtschaftliche Ausbringmaschine nach einem der Ansprüche 4 bis 7, **dadurch gekennzeichnet, dass**
- an der Bedienungseinrichtung (10) eine seitenspezifische Bedienaktion zum Zuschalten einer Schaltgruppe auf einer ersten Seite der landwirtschaftlichen Ausbringmaschine durch Betätigung eines ersten Gruppenzuschaltbedienfeldes (20a) oder einer ersten Gruppenzuschaltbedientaste der Bedienungseinrichtung (10) ausführbar ist; und
- an der Bedienungseinrichtung (10) eine seitenspezifische Bedienaktion zum Zuschalten einer Schaltgruppe auf einer zweiten Seite der landwirtschaftlichen Ausbringmaschine durch Betätigung eines zweiten Gruppenzuschaltbedienfeldes (20b) oder einer zweiten Gruppenzuschaltbedientaste der Bedienungseinrichtung (10) ausführbar ist.

9. Landwirtschaftliche Ausbringmaschine nach einem der Ansprüche 4 bis 8, **dadurch gekennzeichnet, dass** die Bedienungseinrichtung (10) dazu eingerichtet ist, bei einer von einem Bediener ausgeführten seitenspezifischen Bedienaktion zum Abschalten eines einzelnen Ausbringelements das äußerste noch zuschaltete Ausbringelement auf der betroffenen Seite der landwirtschaftlichen Ausbringmaschine abzuschalten.

10. Landwirtschaftliche Ausbringmaschine nach einem der Ansprüche 4 bis 9, **dadurch gekennzeichnet, dass**
- an der Bedienungseinrichtung (10) eine seitenspezifische Bedienaktion zum Abschalten eines einzelnen Ausbringelements auf einer ersten Seite der landwirtschaftlichen Ausbringmaschine durch Betätigung eines ersten Einzelabschaltbedienfeldes (22a) oder einer ersten Einzelabschaltbedientaste der Bedienungseinrichtung (10) ausführbar ist; und
- an der Bedienungseinrichtung (10) eine seitenspezifische Bedienaktion zum Abschalten eines einzelnen Ausbringelements auf einer zweiten Seite der landwirtschaftlichen Ausbringmaschine durch Betätigung eines zweiten Einzelabschaltbedienfeldes (22b) oder einer zweiten Einzelabschaltbedientaste der Bedienungseinrichtung (10) ausführbar ist.

11. Landwirtschaftliche Ausbringmaschine nach einem der Ansprüche 4 bis 10, **dadurch gekennzeichnet, dass** die Bedienungseinrichtung (10) dazu eingerichtet ist, bei einer von einem Bediener ausgeführten seitenspezifischen Bedienaktion zum Zuschalten eines einzelnen Ausbringelements das innerste noch abgeschaltete Ausbringelement auf der betroffenen Seite der landwirtschaftlichen Ausbringmaschine zuzuschalten.

12. Landwirtschaftliche Ausbringmaschine nach einem der Ansprüche 4 bis 11, **dadurch gekennzeichnet, dass**
- an der Bedienungseinrichtung (10) eine seitenspezifische Bedienaktion zum Zuschalten eines einzelnen Ausbringelements auf einer ersten Seite der landwirtschaftlichen Ausbringmaschine durch Betätigung eines ersten Einzelzuschaltbedienfeldes (24a) oder einer ersten Einzelzuschaltbedientaste der Bedienungseinrichtung (10) ausführbar ist; und
- an der Bedienungseinrichtung (10) eine seitenspezifische Bedienaktion zum Zuschalten eines einzelnen Ausbringelements auf einer zweiten Seite der landwirtschaftlichen Ausbringmaschine durch Betätigung eines zweiten Einzelzuschaltbedienfeldes (24b) oder einer zweiten Einzelzuschaltbedientaste der Bedienungseinrichtung (10) ausführbar ist.

13. Landwirtschaftliche Ausbringmaschine nach einem der vorstehenden Ansprüche,
**dadurch gekennzeichnet, dass** die Ausbringelemente als Spritzdüsen und/oder die Schaltelemente als Durchflusssperrventile oder Durchflussregelventile ausgebildet sind.

14. Landwirtschaftliche Ausbringmaschine nach einem der Ansprüche 1 bis 12, **dadurch gekennzeichnet, dass** die Ausbringelemente als Säschare und/oder die Schaltelemente als Sperrkörper zum Sperren von zu den Säscharen führenden Ausbringpfaden ausgebildet sind.

15. Landwirtschaftliche Ausbringmaschine nach einem der Ansprüche 1 bis 12, **dadurch gekennzeichnet, dass** die Ausbringelemente als Düngerabgabeeinrichtungen und/oder die Schaltelemente als Sperrkörper zum Sperren von zu den Düngerabgabeeinrichtungen führenden Ausbringpfaden ausgebildet sind.
